# EUROPEAN PATENT SPECIFICATION

(11) **EP 2 963 838 B1**
(45) Date of publication and mention of the grant of the patent: **01.05.2019**
(21) Application number: 13876649.8
(22) Date of filing: 06.03.2013
(51) Int. Cl.: H04B 3/54, H04L 1/00, H04L 5/00

(54) **METHOD AND APPARATUS FOR COMMUNICATION THROUGH POWER LINE**
VERFAHREN UND VORRICHTUNG ZUR KOMMUNIKATION ÜBER EINE STROMLEITUNG
PROCÉDÉ ET APPAREIL POUR DES TRANSMISSIONS SUR COURANT PORTEUR

(30) Priority: 28.02.2013 CN 201310065005
(43) Date of publication of application: 06.01.2016
(73) Proprietor: Siemens Aktiengesellschaft, 80333 München (DE)
(72) Inventor: YE, Hua, Nanjing Jiangsu 210007 (CN)
(74) Representative: Isarpatent
(86) International application number: PCT/CN2013/072245
(87) International publication number: WO 2014/131204

(56) References cited:
- CN-A- 1 149 360
- CN-A- 102 089 991
- CN-A- 102 255 841
- CN-A- 102 264 155
- KR-A- 20020 007 441
- US-A1- 2005 078 803
- US-A1- 2009 190 673

## Description

### TECHNICAL FIELD

The present invention relates to the field of power line carrier communications, and particularly to a method and device for communication through a power line.

### BACKGROUND ART

Power line carrier communication (PLC) is power system communication taking a power transmission line as a transmission medium of carrier signals. Since a power transmission line has an extremely firm supporting structure, and is provided with more than three conductors (generally having a three-phase good conductor and one or two overhead ground wires), the power transmission line using a power frequency current to transmit carrier signals while transporting same is not only economical but also reliable. Therefore, power line carrier communication has become a typical communication means preferentially adopted by the electric power sector.

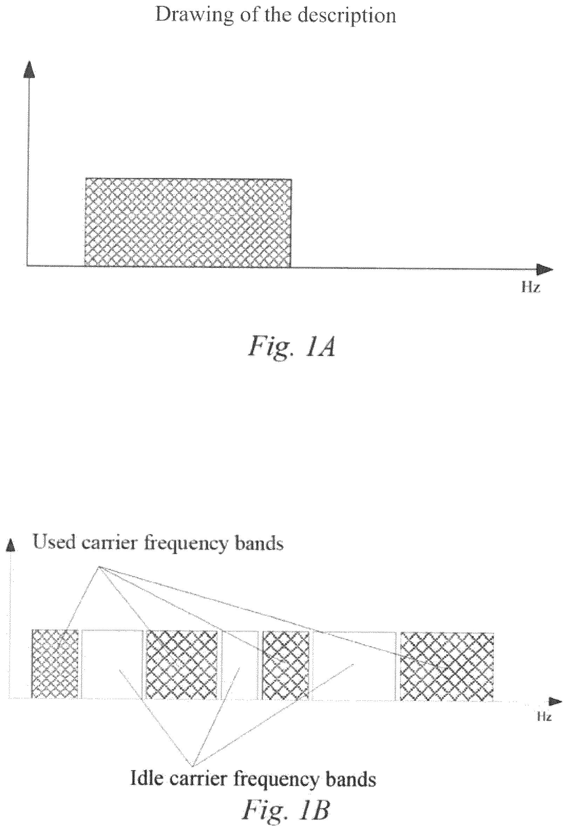

In the existing solution of power line carrier communication, a communication device uses the continuous carrier frequency band of a power line to transmit data of various services, and the bandwidth of the continuous carrier frequency band is sufficient to guarantee the communication quality requirements of the communication device. Fig. 1A shows an example of a continuous carrier frequency band.

However, with the increase of communication devices using a power line for communication, a certain amount of occupied frequency bands are distributed on the power line in a communication frequency band available for the whole power line, wherein each occupied frequency band itself is a continuous carrier frequency band, and various occupied frequency bands are independent from each other. Thus, most parts of the communication frequency band available for the whole power line are used simultaneously. In such a situation, if certain communication devices still expect to use a certain continuous carrier frequency band having a designated band degree (or bandwidth) of the power line to transmit data, a continuous carrier frequency band no less than the designated band degree cannot be found in unoccupied carrier frequency bands (as shown in Fig. 1B) of the power line for use by these communication devices. In this case, these communication devices can only reduce the communication quality requirements (for example, reducing the quantity of services and/or reducing the data rate), and use a continuous carrier frequency band less than the designated band degree of the power line for communication.
US 2005/0078803 A1 relates to a multicarrier communication operable to select carriers on the basis of a SN-ratio and the balancing of the transmission line in a multicarrier communication using a balanced transmission line.
US 2009/0190673 A1 relates to a power line apparatus, an integrated circuit for power line communication and transmission/reception methods.

### CONTENTS OF THE INVENTION

Provided in the embodiments of the present invention are a method and device for communication through a power line, which can guarantee the communication quality requirements of a communication device.

A method for communication through a power line according to the embodiments of the present invention comprises: continuously sending a pilot signal with a predetermined level over each of a plurality of carrier frequency bands of a power line, wherein the plurality of carrier frequency bands are discrete from each other; and sending data over each of the plurality of carrier frequency bands.

In one particular implementation, the data sent over each of the plurality of carrier frequency bands respectively belongs to different services.

A method for communication through a power line according to the embodiments of the present invention comprises: receiving a pilot signal and data from each of a plurality of carrier frequency bands of a power line, wherein the plurality of carrier frequency bands are discrete from each other; calculating a level value of the pilot signal received from each of the plurality of carrier frequency bands; and for each of the plurality of carrier frequency bands, performing automatic gain control on the data received from that carrier frequency band according to the calculated level value of the pilot signal received from that carrier frequency band.

In one particular implementation, the data received from each of the plurality of carrier frequency bands respectively belong to different services.

A device for communication through a power line according to the embodiments of the present invention comprises: a sending module for continuously sending a pilot signal with a predetermined level over each of a plurality of carrier frequency bands of a power line, wherein the plurality of carrier frequency bands are discrete from each other; and a transmission module for sending data over each of the plurality of carrier frequency bands.

In one particular implementation, the data sent over each of the plurality of carrier frequency bands respectively belong to different services.

A device for communication through a power line according to the embodiments of the present invention comprises: a receiving module for receiving a pilot signal and data from each of a plurality of carrier frequency bands of a power line, wherein the plurality of carrier frequency bands are discrete from each other; a calculation module for calculating a level value of the pilot signal received from each of the plurality of carrier frequency bands; and a gain control module for, for each of the plurality of carrier frequency bands, performing automatic gain control on the data received from that carrier frequency band according to the calculated level value of the pilot signal received from that carrier frequency band.

In one particular implementation, the data received from each of the plurality of carrier frequency bands respectively belong to different services.

From the description above, it can be seen that the solution of the embodiments of the present invention combines a plurality of carrier frequency bands discrete from each other of a power line for communication to meet the bandwidth requirements required by the communication, and sends a pilot signal over each of the plurality of carrier frequency bands which are discrete from each other, so that a communication device serving as a receiver can perform gain control on data received from each of the plurality of carrier frequency bands so as to meet signal level requirements based on a level value of the pilot signal sent over each of the plurality of carrier frequency bands. Therefore, compared with the related art, the solution of the embodiments of the present invention can guarantee the communication quality requirements of a communication device.

### BRIEF DESCRIPTION OF THE DRAWINGS

The other features, characteristics, advantages and benefits of the present invention will become more apparent by way of the detailed description hereinbelow in conjunction with the accompanying drawings.
Fig. 1A shows an example of a continuous carrier frequency band.
Fig. 1B shows a schematic diagram of carrier frequency bands of a power line.
Fig. 2 shows a schematic diagram of a power line carrier communication system according to an embodiment of the present invention.
Fig. 3 shows a flowchart of a method for communication through a power line according to an embodiment of the present invention.
Fig. 4 shows a flowchart of a device for communication through a power line according to an embodiment of the present invention.
Fig. 5 shows a flowchart of a device for communication through a power line according to another embodiment of the present invention.
Fig. 6 shows a schematic diagram of a communication device according to an embodiment of the present invention.
Fig. 7 shows a schematic diagram of a communication device according to another embodiment of the present invention.

### DETAILED DESCRIPTION OF EMBODIMENTS

Various embodiments of the present invention will be described below in detail in conjunction with the accompanying drawings.

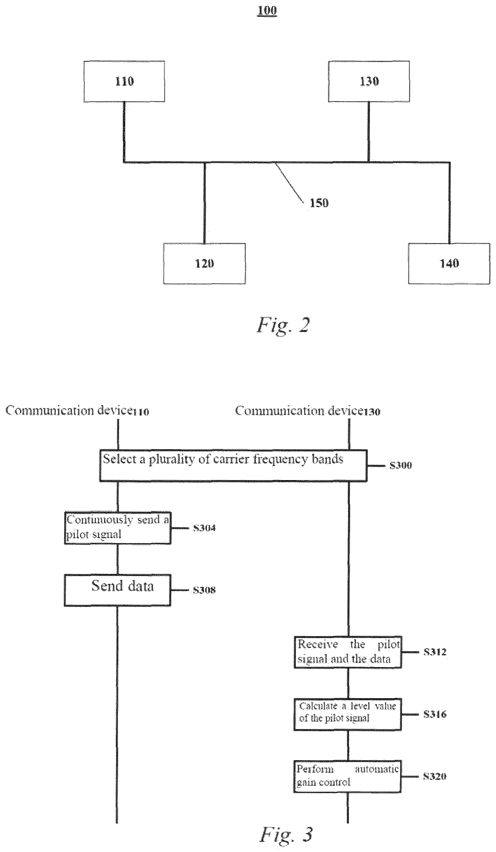

Now referring to Fig. 2, it shows a schematic diagram of a power line carrier communication system according to an embodiment of the present invention. As shown in Fig. 2, a power line carrier communication system 100, for example, comprises a communication device 110, a communication device 120, a communication device 130, a communication device 140 and a power line 150 connecting each of the communication devices, wherein the communication device 110, the communication device 120, the communication device 130, and the communication device 140 can perform mutual communication through the power line 150. Here, data sent out by a communication device can be regarded as data of a power line communication user. The user data can comprise a single service, and can also comprise a variety of different services.

Now referring to Fig. 3. Fig. 3 shows a flowchart of a method for communication through a power line according to an embodiment of the present invention. Here, the method of this embodiment is described in detail by taking the communication device 110 sending data to the communication device 130 through the power line 150 as an example, and it is assumed that the bandwidth required to send the data by the communication device 110 to the communication device 130 is K.

As shown in Fig. 3, in step S300, if an unused carrier frequency band with the bandwidth thereof no less than K does not exist in the power line 150, the communication device 110 and the communication device 130 acquire unoccupied carrier frequency bands on the power line 150, and select a plurality of carrier frequency bands PD therefrom, wherein the total bandwidth of the plurality of carrier frequency bands PD is greater than or equal to K. Apparently, the plurality of carrier frequency bands PD are discrete from each other, for example, the plurality of carrier frequency bands PD are separated from each other by occupied carrier frequency bands. The interval between the plurality of carrier frequency bands PD and the occupied carrier frequency bands also meets the communication interference requirements. In an embodiment of the present invention, the unoccupied carrier frequency bands can be learnt in advance by each of the communication devices, or can be learnt by means of detecting a signal on the power line.

In step S304, the communication device 110 continuously sends a pilot signal having a predetermined level over each of the plurality of carrier frequency bands PD of the power line 150.

In step S308, the communication device 110 sends data to be transmitted to the communication device 130 over each of the plurality of carrier frequency bands PD of the power line 150, wherein the data can be, for example, different service data of the same power line communication user.

In step S312, the communication device 130 receives the pilot signal and the data sent by the communication device 110 from each of the plurality of carrier frequency bands PD of the power line 150. For the communication device 130, these carrier frequency bands have been learnt in advance. As stated above, the communication device 130 can be informed of these carrier frequency bands in advance, and can also learn same by means of detecting the signal on the power line.

In step S316, the communication device 130 calculates a level value of the pilot signal received from each of the plurality of carrier frequency bands PD.

In step S320, the communication device 130 performs, for each of the plurality of carrier frequency bands PD, automatic gain control on the data received from that carrier frequency band PD according to the level value of the pilot signal received from that carrier frequency band PD, so that the signal level of the data meets the predetermined signal level requirement. After performing automatic gain control on the received data, the communication device 130 can further perform subsequent processing on the received data, such as demodulation and decoding.

From the description above, it can be seen that the solution of the embodiments combines a plurality of carrier frequency bands discrete from each other of the power line 150 for communication to meet the bandwidth requirements required by communication, and sends a pilot signal over each of the plurality of carrier frequency bands which are discrete from each other, so that the communication device 130 serving as a receiver can perform automatic gain control on data received from each of the plurality of carrier frequency bands so as to meet signal level requirements based on a level value of the pilot signal sent over each of the plurality of carrier frequency bands. Therefore, the solution of the embodiments can guarantee the communication quality requirements of a communication device.

A person skilled in the art should understand that, although in the above embodiments, the power line carrier communication system 100 comprises four communication devices, the present invention is not limited to this. In some other embodiments of the present invention, the number of communication devices comprised in the power line carrier communication system 100 can be less than four or greater than four.

A person skilled in the art should understand that, although in the above embodiments, insofar as an unused carrier frequency band with the bandwidth thereof no less than K does not exist in the power line 150, the communication device 110 and the communication device 130 then select a plurality of carrier frequency bands for communication from the various unused carrier frequency bands of the power line 150, the present invention is not limited to this. In some other embodiments of the present invention, even if an unused carrier frequency band with the bandwidth thereof no less than K exists in the power line 150, the communication device 110 and the communication device 130 can also select a plurality of carrier frequency bands for communication from the various unused carrier frequency bands of the power line 150.

A person skilled in the art should understand that, the data sent by the communication device 110 over each of the plurality of carrier frequency bands PD may belong to different services (such as a digital data service, an analog voice service, an analog digital service and a protection signaling service) . In this situation, since the plurality of carrier frequency bands PD are discrete from each other, the mutual interference among each service is reduced and even eliminated.

A person skilled in the art should understand that, the communication device 110 can also simultaneously send the same data of the same service within several carrier frequency bands of the plurality of carrier frequency bands PD. Thus, even if certain carrier frequency bands in the several carrier frequency bands cannot work due to interference, the communication device 130 serving as a receiver can also receive the same data of the same service from other carrier frequency bands in the several carrier frequency bands. Here, if the communication device 130 receives a plurality of copies of the same data of the same service from two or more than two carrier frequency bands, the communication device 130 can only receive that piece of data received from the carrier frequency band with the best signal quality status as receiving data, alternately, the communication device 130 can take the data obtained by performing weighted summation on the plurality of copies of the same data as receiving data.

A person skilled in the art should understand that, before the communication device 110 sends data over each of the plurality of carrier frequency bands PD of the power line 150, the communication device 110 can measure the signal quality status of each of the plurality of carrier frequency bands PD, and then the communication device 110 uses an appropriate modulation method to modulate the data to be transmitted over each of the plurality of carrier frequency bands PD according to the measured signal quality status of each of the plurality of carrier frequency bands PD, and finally sends the modulated data over a corresponding carrier frequency band. The appropriate modulation method selects according to the following method: when the signal quality status of the carrier frequency bands is good, using a modulation method capable of obtaining a higher valid data transmission rate; and when the signal quality status of the carrier frequency bands is bad, using a modulation method with a stronger anti-interference capability. In other words, the modulation method adopted by the data sent over each carrier frequency band PD of the plurality of carrier frequency bands PD is determined based on the signal quality status of the carrier frequency band PDi.

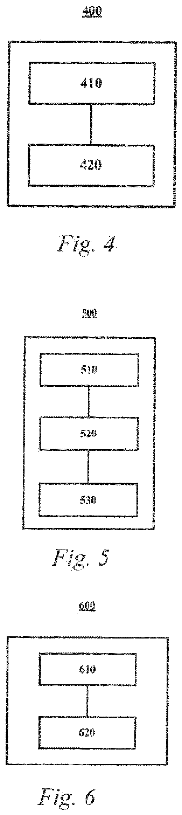

Now referring to Fig. 4, it shows a schematic diagram of a device for communication through a power line according to an embodiment of the present invention. The device shown in Fig. 4 can be realized using software, hardware (e.g., an integrated circuit, an FPGA, etc.) or a combination of software and hardware, and can be installed in a communication device serving as a sender.

As shown in Fig. 4, a device 400 for communication through a power line can comprise a sending module 410 and a transmission module 420, wherein the sending module 410 can be used for continuously sending a pilot signal with a predetermined level over each of a plurality of carrier frequency bands of a power line, wherein the plurality of carrier frequency bands are discrete from each other, and the transmission module 420 can be used for sending data over each of the plurality of carrier frequency bands,
wherein the data sent over each of the plurality of carrier frequency bands may respectively belong to different services,
wherein a modulation method adopted by the data sent over each of the plurality of carrier frequency bands is determined based on the signal quality status of the carrier frequency band,
and wherein the data sent in several carrier frequency bands of the plurality of carrier frequency bands may be the same data of the same service.

Now referring to Fig. 5, it shows a schematic diagram of a device for communication through a power line according to another embodiment of the present invention. The device shown in Fig. 5 can be realized using software, hardware (e.g., an integrated circuit, an FPGA, etc.) or a combination of software and hardware, and can be installed in a communication device serving as a receiver.

As shown in Fig. 5, a device 500 for communication through a power line can comprise a receiving module 510, a calculation module 520 and a gain control module 530, wherein the receiving module 510 can be used for receiving a pilot signal and data from each of a plurality of carrier frequency bands of a power line, wherein the plurality of carrier frequency bands are discrete from each other. The calculation module 520 can be used for calculating a level value of the pilot signal received from each of the plurality of carrier frequency bands, and the gain control module 530 can be used for, for each of the plurality of carrier frequency bands, performing automatic gain control on the data received from that carrier frequency band according to the calculated level value of the pilot signal received from that carrier frequency band,
wherein the data received from each of the plurality of carrier frequency bands may respectively belong to different services,
wherein a modulation method adopted by the data received from each of the plurality of carrier frequency bands is determined based on the signal quality status of the carrier frequency band,
and wherein the data received from at least one carrier frequency band of the plurality of carrier frequency bands can be the same data of the same service.

Now referring to Fig. 6, it shows a schematic diagram of a communication device according to an embodiment of the present invention. As shown in Fig. 6, a communication device 600 can comprise a memory 610 used for storing an executable instruction and a processor 620,
wherein the processor 620 can execute the following operations according to the executable instruction stored in the memory 610: continuously sending a pilot signal with a predetermined level over each of a plurality of carrier frequency bands of a power line, wherein the plurality of carrier frequency bands are discrete from each other; and sending data over each of the plurality of carrier frequency bands,
wherein the data sent over each of the plurality of carrier frequency bands may respectively belong to different services,
wherein a modulation method adopted by the data sent over each of the plurality of carrier frequency bands is determined based on the signal quality status of the carrier frequency band.

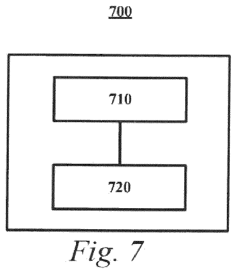

Now referring to Fig. 7, it shows a schematic diagram of a communication device according to an embodiment of the present invention. As shown in Fig. 7, a communication device 700 can comprise a memory 710 used for storing an executable instruction and a processor 720,
wherein the processor 720 can execute the following operations according to the executable instruction stored in the memory 710: receiving a pilot signal and data from each of a plurality of carrier frequency bands of a power line, wherein the plurality of carrier frequency bands are discrete from each other; calculating a level value of the pilot signal received from each of the plurality of carrier frequency bands; and for each of the plurality of carrier frequency bands, performing automatic gain control on the data received from that carrier frequency band according to the calculated level value of the pilot signal received from that carrier frequency band,
wherein the data received from each of the plurality of carrier frequency bands may respectively belong to different services,
wherein a modulation method adopted by the data received from each of the plurality of carrier frequency bands is determined based on the signal quality status of the carrier frequency band.

Also provided in the embodiments of the present invention is a machine-readable medium on which an executable instruction is stored, wherein when being executed, the executable instruction causes a machine to realize the operations of the processor 620 or 720.

A person skilled in the art should understand that various variations and modifications can be made to the above various embodiments without departing from the essence of the invention. Therefore, the protection scope of the present invention should be defined by the appended claims.

## Claims

1. A method for communication through a power line (150), **characterized by**:
obtaining a plurality of unoccupied carrier frequency bands on a power line (150), wherein the plurality of carrier frequency bands are discrete from each other (S300);
continuously sending a pilot signal with a predetermined level over each of the plurality of carrier frequency bands (S304); and
sending data over each of the plurality of carrier frequency bands (S308), wherein the data is data of the same power line communication user.

2. The method as claimed in claim 1, **characterized in that**
the data sent over each of the plurality of carrier frequency bands respectively belong to different services of the same power line communication user.

3. The method as claimed in claim 1, **characterized in that**
the data sent over at least two carrier frequency bands of the plurality of carrier frequency bands are identical to each other.

4. The method as claimed in claim 1, **characterized in that** a modulation method adopted by the data sent over each of the plurality of carrier frequency bands is determined based on the signal quality status of the carrier frequency band.

5. A method for communication through a power line (150), **characterized by**:
acquiring a plurality of carrier frequency bands used for transmitting data of the same user on a power line (150), wherein the plurality of carrier frequency bands are discrete from each other (S300);
receiving (S312) a pilot signal and data from each of the plurality of carrier frequency bands of the power line (150);
calculating a level value of the pilot signal received from each of the plurality of carrier frequency bands (S316); and
for each of the plurality of carrier frequency bands, performing automatic gain control on the data received from that carrier frequency band according to the calculated level value of the pilot signal received from that carrier frequency band (S320).

6. The method as claimed in claim 5, **characterized in that**
the data received from each of the plurality of carrier frequency bands respectively belong to different services of the same user.

7. The method as claimed in claim 5, **characterized in that**
the data sent over at least two carrier frequency bands of the plurality of carrier frequency bands are identical to each other, and the method further comprises:
obtaining the required data based on the signal acquired from the at least two carrier frequency bands.

8. The method as claimed in claim 1 or 5, **characterized in that**
the plurality of carrier frequency bands are separated by occupied carrier frequency bands.

9. A device (400) for communication through a power line (150), **characterized by**:
a sending module (410) for continuously sending a pilot signal with a predetermined level over each of a plurality of carrier frequency bands of a power line (150), wherein the plurality of carrier frequency bands are carrier frequency bands obtained in advance and discrete from each other, and
a transmission module (420) for sending data over each of the plurality of carrier frequency bands, wherein the data is data of the same power line communication user.

10. The device (400) as claimed in claim 9, **characterized in that**
the data sent over each of the plurality of carrier frequency bands respectively belong to different services of the same user.

11. The device (400) as claimed in claim 9, **characterized in that**
the data sent over at least two carrier frequency bands of the plurality of carrier frequency bands are identical to each other.

12. A device (500) for communication through a power line (150), **characterized by**:
a receiving module (510) for receiving a pilot signal and data from each of a plurality of carrier frequency bands of a power line (150), wherein the plurality of carrier frequency bands are carrier frequency bands obtained in advance and discrete from each other;
a calculation module (520) for calculating a level value of the pilot signal received from each of the plurality of carrier frequency bands; and
a gain control module (530) for, for each of the plurality of carrier frequency bands, performing automatic gain control on the data received from that carrier frequency band according to the calculated level value of the pilot signal received from that carrier frequency band.

13. The device as claimed in claim 12, **characterized in that**
the data received from each of the plurality of carrier frequency bands respectively belong to different services.

## Patentansprüche

1. Verfahren für eine Kommunikation über eine Stromleitung (150), **gekennzeichnet durch**:
Erhalten mehrerer nicht belegter Trägerfrequenzbänder auf einer Stromleitung (150), wobei die mehreren Trägerfrequenzbänder voneinander verschieden sind (S300);
kontinuierliches Senden eines Pilotsignals mit einem vorbestimmten Pegel über jedes der mehreren Trägerfrequenzbänder (S304); und
Senden von Daten über jedes der mehreren Trägerfrequenzbänder (S308), wobei die Daten Daten desselben Stromleitungskommunikationsanwenders sind.

2. Verfahren nach Anspruch 1, **dadurch gekennzeichnet, dass**
die über jedes der mehreren Trägerfrequenzbänder gesendeten Daten jeweils zu verschiedenen Diensten desselben Stromleitungskommunikationsanwenders gehören.

3. Verfahren nach Anspruch 1, **dadurch gekennzeichnet, dass** die über mindestens zwei Trägerfrequenzbänder der mehreren Trägerfrequenzbänder gesendeten Daten identisch sind.

4. Verfahren nach Anspruch 1, **dadurch gekennzeichnet, dass** ein Modulationsverfahren, das durch die über jedes der mehreren Trägerfrequenzbänder gesendeten Daten eingesetzt wird, anhand des Signalqualitätsstatus des Trägerfrequenzbands bestimmt wird.

5. Verfahren für eine Kommunikation über eine Stromleitung (150), **gekennzeichnet durch**:
Erfassen mehrerer Trägerfrequenzbänder, die zum Senden von Daten desselben Anwenders auf einer Stromleitung (150) verwendet werden, wobei die mehreren Trägerfrequenzbänder voneinander verschieden sind (S300);
Empfangen (S312) eines Pilotsignals und von Daten von jedem der mehreren Trägerfrequenzbänder der Stromleitung (150);
Berechnen eines Pegelwerts des von jedem der mehreren Trägerfrequenzbänder (S316) empfangenen Pilotsignals; und
für jedes der mehreren Trägerfrequenzbänder Ausführen einer automatischen Verstärkungssteuerung an den von dem Trägerfrequenzband empfangenen Daten gemäß dem berechneten Pegelwert des von diesem Trägerfrequenzband empfangenen Pilotsignals (S320).

6. Verfahren nach Anspruch 5, **dadurch gekennzeichnet, dass** die von jedem der mehreren Trägerfrequenzbänder empfangenen Daten jeweils zu verschiedenen Diensten desselben Anwenders gehören.

7. Verfahren nach Anspruch 5, **dadurch gekennzeichnet, dass** die über mindestens zwei Trägerfrequenzbänder der mehreren Trägerfrequenzbänder gesendeten Daten identisch sind und das Verfahren ferner umfasst:
Erhalten der erforderlichen Daten anhand des Signals, das von den mindestens zwei Trägerfrequenzbändern erfasst wird.

8. Verfahren nach Anspruch 1 oder 5, **dadurch gekennzeichnet, dass**
die mehreren Trägerfrequenzbänder durch belegte Trägerfrequenzbänder getrennt sind.

9. Vorrichtung (400) für die Kommunikation über eine Stromleitung (150), **gekennzeichnet durch**:
ein Sendemodul (410) zum kontinuierlichen Senden eines Pilotsignals mit einem vorbestimmten Pegel über jedes von mehreren Trägerfrequenzbändern einer Stromleitung (150), wobei die mehreren Trägerfrequenzbänder Trägerfrequenzbänder sind, die im Voraus erhalten werden und die voneinander verschieden sind, und
ein Sendemodul (420) zum Senden von Daten über jedes der mehreren Trägerfrequenzbänder, wobei die Daten Daten desselben Stromleitungskommunikationsanwenders sind.

10. Vorrichtung (400) nach Anspruch 9, **dadurch gekennzeichnet, dass**
die über jedes der mehreren Trägerfrequenzbänder gesendeten Daten jeweils zu verschiedenen Diensten desselben Anwenders gehören.

11. Vorrichtung (400) nach Anspruch 9, **dadurch gekennzeichnet, dass**
die über mindestens zwei Trägerfrequenzbänder der mehreren Trägerfrequenzbänder gesendeten Daten identisch sind.

12. Vorrichtung (500) für eine Kommunikation über eine Stromleitung (150), **gekennzeichnet durch**:
ein Empfangsmodul (510) zum Empfangen eines Pilotsignals und von Daten von jedem von mehreren Trägerfrequenzbändern einer Stromleitung (150), wobei die mehreren Trägerfrequenzbänder Trägerfrequenzbänder sind, die im Voraus erhalten werden und die voneinander verschieden sind;
ein Berechnungsmodul (520) zum Berechnen eines Pegelwerts des von jedem der mehreren Trägerfrequenzbänder empfangenen Pilotsignals; und
ein Verstärkungssteuermodul (530) zum Ausführen einer automatischen Verstärkungsteuerung für jedes der mehreren Trägerfrequenzbänder an den von dem Trägerfrequenzband empfangenen Daten gemäß dem berechneten Pegelwert des von diesem Trägerfrequenzband empfangenen Pilotsignals.

13. Vorrichtung nach Anspruch 12, **dadurch gekennzeichnet, dass**
die von jedem der mehreren Trägerfrequenzbänder empfangenen Daten jeweils zu verschiedenen Diensten gehören.

## Revendications

1. Procédé de communication par l'intermédiaire d'une ligne électrique (150), **caractérisé par** :
l'obtention d'une pluralité de bandes de fréquences porteuses inoccupées sur une ligne électrique (150), la pluralité de bandes de fréquences porteuses étant discrètes les unes par rapport aux autres (S300) ;
l'envoi en continu d'un signal pilote présentant un niveau prédéterminé sur chacune de la pluralité de bandes de fréquences porteuses (S304) ; et
l'envoi de données sur chacune de la pluralité de bandes de fréquences porteuses (S308), les données consistant en des données du même utilisateur de communication sur ligne électrique.

2. Procédé selon la revendication 1, **caractérisé en ce que**
les données envoyées sur chacune de la pluralité de bandes de fréquences porteuses appartiennent respectivement à des services différents du même utilisateur de communication sur ligne électrique.

3. Procédé selon la revendication 1, **caractérisé en ce que**
les données envoyées sur au moins deux bandes de fréquences porteuses de la pluralité de bandes de fréquences porteuses sont identiques les unes aux autres.

4. Procédé selon la revendication 1, **caractérisé en ce qu'**un procédé de modulation adopté par les données envoyées sur chacune de la pluralité de bandes de fréquences porteuses est déterminé en fonction de l'état de qualité de signal de la bande de fréquences porteuses.

5. Procédé de communication par l'intermédiaire d'une ligne électrique (150), **caractérisé par** :
l'acquisition d'une pluralité de bandes de fréquences porteuses utilisées pour la transmission de données du même utilisateur sur une ligne électrique (150), la pluralité de bandes de fréquences porteuses étant discrètes les unes par rapport aux autres (S300) ;
la réception (S312) d'un signal pilote et de données depuis chacune de la pluralité de bandes de fréquences porteuses de la ligne électrique (150) ;
le calcul d'une valeur de niveau du signal pilote reçu depuis chacune de la pluralité de bandes de fréquences porteuses (S316) ; et
pour chacune de la pluralité de bandes de fréquences porteuses, l'application d'une commande automatique de gain sur les données reçues depuis cette bande de fréquences porteuses selon la valeur de niveau calculée du signal pilote reçu depuis cette bande de fréquences porteuses (S320).

6. Procédé selon la revendication 5, **caractérisé en ce que**
les données reçues depuis chacune de la pluralité de bandes de fréquences porteuses appartiennent respectivement à des services différents du même utilisateur.

7. Procédé selon la revendication 5, **caractérisé en ce que**
les données envoyées sur au moins deux bandes de fréquences porteuses de la pluralité de bandes de fréquences porteuses sont identiques les unes aux autres, et **en ce qu'**il comprend en outre :
l'obtention des données requises en fonction du signal acquis depuis les au moins deux bandes de fréquences porteuses.

8. Procédé selon la revendication 1 ou 5, **caractérisé en ce que**
la pluralité de bandes de fréquences porteuses sont séparées par des bandes de fréquences porteuses occupées.

9. Dispositif (400) de communication par l'intermédiaire d'une ligne électrique (150), **caractérisé par** :
un module d'envoi (410) destiné à envoyer en continu un signal pilote présentant un niveau prédéterminé sur chacune d'une pluralité de bandes de fréquences porteuses d'une ligne électrique (150), la pluralité de bandes de fréquences porteuses consistant en des bandes de fréquences porteuses obtenues au préalable et discrètes les unes par rapport aux autres, et
un module de transmission (420) destiné à envoyer des données sur chacune de la pluralité de bandes de fréquences porteuses, les données consistant en des données du même utilisateur de communication sur ligne électrique.

10. Dispositif (400) selon la revendication 9, **caractérisé en ce que**
les données envoyées sur chacune de la pluralité de bandes de fréquences porteuses appartiennent respectivement à des services différents du même utilisateur.

11. Dispositif (400) selon la revendication 9, **caractérisé en ce que**
les données envoyées sur au moins deux bandes de fréquences porteuses de la pluralité de bandes de fréquences porteuses sont identiques les unes aux autres.

12. Dispositif (500) de communication par l'intermédiaire d'une ligne électrique (150), **caractérisé par** :
un module de réception (510) destiné à recevoir un signal pilote et des données depuis chacun d'une pluralité de bandes de fréquences porteuses d'une ligne électrique (150), la pluralité de bandes de fréquences porteuses consistant en des bandes de fréquences porteuses obtenues au préalable et discrètes les unes par rapport aux autres ;
un module de calcul (520) destiné à calculer une valeur de niveau du signal pilote reçu depuis chacune de la pluralité de bandes de fréquences porteuses ; et
un module de commande de gain (530) destiné, pour chacune de la pluralité de bandes de fréquences porteuses, à appliquer une commande automatique de gain sur les données reçues depuis cette bande de fréquences porteuses selon la valeur de niveau calculée du signal pilote reçu depuis cette bande de fréquences porteuses.

13. Dispositif selon la revendication 12, **caractérisé en ce que**
les données reçues depuis chacune de la pluralité de bandes de fréquences porteuses appartiennent respectivement à des services différents.
